# EUROPÄISCHE PATENTSCHRIFT

(11) **EP 1 135 970 B1**
(45) Veröffentlichungstag und Bekanntmachung des Hinweises auf die Patenterteilung: **19.05.2004**
(21) Anmeldenummer: 99953762.4
(22) Anmeldetag: 09.10.1999
(51) Int. Cl.: H05B 6/64

(54) **HEIZUNGSANORDNUNG**
HEATING ARRANGEMENT
SYSTEME DE CHAUFFAGE

(30) Priorität: 27.10.1998 DE 19849432
(43) Veröffentlichungstag der Anmeldung: 26.09.2001
(73) Patentinhaber: Molekulare Energietechnik AG, 9490 Vaduz (LI)
(72) Erfinder: REICHELT, Helmut, D-01069 Dresden (DE)
(74) Vertreter: Neubauer, Hans-Jürgen, Dipl.-Phys.
(86) Internationale Anmeldenummer: PCT/EP1999/007583
(87) Internationale Veröffentlichungsnummer: WO 2000/025552

(56) Entgegenhaltungen:
- WO-A-96/05910
- DE-A- 19 714 299
- FR-A- 2 279 254
- DATABASE WPI Week 199111 Derwent Publications Ltd., London, GB; AN 1991-076053 XP002130264 & JP 03 021348 A (KOMATSU ELECTRONICS CO)

## Beschreibung

Die Erfindung betrifft eine Heizungsanordnung.

Es sind bereits ein Verfahren und eine Vorrichtung zur Veränderung der Temperatur einer diskreten Materie bekannt (EP 0 777 524 B1), welche insbesondere zur Erhöhung der Temperatur der diskreten Materie, d. h. zu Heizzwecken verwendbar sind.

Das Verfahren zur Erhöhung der Temperatur der diskreten Materie verwendet eine großflächige Sendeantenne, durch die eine elektromagnetische Strahlung mit einer Frequenz abgestrahlt wird, die in der Größenordnung der molekularen Eigenschwingungen der zu erwärmenden diskreten Materie liegt, ohne dass diese Frequenz eine aufmodulierte Trägerfrequenz ist. Die zu erwärmende diskrete Materie wird in den Strahlungsbereich der Sendeantenne gebracht, wobei in der diskreten Materie eine zu einer Erwärmung derselben führende Resonanz der molekularen Eigenschwingungen erzeugt wird. Bei einer Anordnung der Vorrichtung in einem geschlossenen Raum, der zusätzlich zu der diskreten Materie mit einem Medium gefüllt ist, kann durch geeignete Wahl des Strahlungsspektrums das Medium ebenfalls zur Erwärmung in die Resonanzwechselwirkung einbezogen werden.

Eine geeignete Vorrichtung zur Durchführung des vorstehenden Verfahrens umfasst eine großflächige Sendeantenne, die auf einer Seite von einer ersten Zuleitung und auf der anderen Seite von einer zweiten Zuleitung aus elektrisch gut leitendem Material begrenzt ist. Die Zuleitungen sind mit einem Generator zur Erzeugung der Strahlungsenergie verbunden, wobei die zu erwärmende diskrete Materie in den Strahlungsbereich der Sendeantenne einbringbar ist. Die von der Sendeantenne emittierte Frequenz liegt im Bereich der molekularen Eigenfrequenz der diskreten Materie und/oder eines in einem definierten Raum angeordneten flüssigen oder gasförmigen Mediums.

Durch die Wechselwirkung der großflächigen Sendeantenne als Strahler mit der Materie im Bereich der Resonanzfrequenz wird insbesondere durch Bandenresonanzen ein sehr hoher Wirkungsgrad des Heizsystems erreicht.

Aufgabe der Erfindung ist es, eine Heizungsanordnung zu schaffen, die im wesentlichen die vorstehenden Verfahren benutzt und die Vorrichtungen so weiterbildet, dass bei einer zusätzlichen Steigerung des Wirkungsgrades des Heizsystems eine konstruktiv einfach und kostengünstig realisierbare Anordnung erhalten wird.

Diese Aufgabe wird mit den Merkmalen des Anspruchs 1 gelöst.

Gemäß Anspruch 1 besteht die Heizungsanordnung aus einer Kombination folgender Merkmale:

Die Heizungsanordnung umfasst wenigstens ein Heizelement als Flächenelement mit zwei beabstandeten elektrischen Leitern und einer dazwischen befindlichen Beschichtung aus einem Beschichtungsmaterial zur Erzeugung elektromagnetischer Wellen, bestehend aus Bindemittel, Isolationsmittel, Dispergiermittel, Wasser und Graphit, wobei das Beschichtungsmaterial zusammengesetzt ist aus
a. 55 bis 65 % Stoffmengenanteile einer Grundsubstanz aus
   - 39 bis 49 % Stoffmengenanteile Bindemittel,
   - 18 bis 23 % Stoffmengenanteile Isolationsmittel,
   - 18 bis 24 % Stoffmengenanteile Dispergiermittel,
   - 12 bis 16 % Stoffmengenanteile destilliertes Wasser
   und
b. 35 bis 45 & Stoffmengenanteile Graphit,
   wobei das Bindemittel zusammengesetzt ist aus
   - 64 bis 79 % Stoffmengenanteile destilliertes Wasser,
   - 4 bis 6 % Stoffmengenanteile sulfuriertes Öl,
   - 0,16 bis 0,24 % Stoffmengenanteile Phenole oder 0,05 bis 0,5 % Stoffmengenanteile Benzisothiazolinon,
   - 15 bis 19 % Stoffmengenanteile Kasein,
   - 0,8 bis 1,2 % Stoffmengenanteile Harnstoff,
   - 2 bis 3 % Stoffmengenanteile alkalisches Verdünnungsmittel, und
   - 2,5 bis 3,5 % Stoffmengenanteile Caprolactam, und
wobei mittels des Beschichtungsmaterials aus dem Isolationsmittel, dem Graphit und dem Bindemittel elektromagnetische Wellen aussendbar sind. Erklärbar ist dies durch Dipol-Bildungen im Beschichtungsmaterial.

Ein solcher Beschichtungsmaterial ist aus DE-A-19 714 299 bekannt.

Ein besonders hoher Wirkungsgrad der Heizungsanordnung wird durch Verwendung der angegebenen Beschichtung aus dem speziellen Beschichtungsmaterial erreicht.

Für eine Aufbringung einer gleichmäßigen Beschichtung umfasst das Bindemittel dabei als Hauptbestandteil destilliertes Wasser, das für eine je nach Zugabemenge wenigstens zähflüssige Konsistenz des Bindemittels sorgt. Dadurch können die einzelnen Komponenten des Bindemittels gut miteinander vermischt werden. Das sulfurierte Öl und ggf. ein Verlaufmittel dienen als Lösungsvermittler und bewirken eine gleichmäßige und stabile Verteilung der einzelnen Stoffe in dem Bindemittel sowie die gute Filmbildung des Beschichtungsmaterials auf einem Trägermaterial.

Die in dem Bindemittel enthaltenen Phenole oder Benzisothiazolinon begünstigen bereits in kleinen Mengen die Anlagerung von Partikeln. Das Kasein ist als Bindemittel im Bindemittel anzusehen und bewirkt eine Anlagerung der einzelnen Komponenten innerhalb des Bindemittels. Der Harnstoff wird im Bindemittel ebenfalls als Lösungsvermittler verwendet, d. h. er begünstigt die gleichmäßige Verteilung der einzelnen Komponenten in dem Bindemittel. Zusätzlich ist in dem Bindemittel ein, der Homogenisierung dienendes Verdünnungsmittel sowie Caprolactam als Aufbaustoff enthalten.

Die Grundsubstanz umfasst als Hauptbestandteil das Bindemittel, an das sich die Partikel des Isolationsmittels als der eine Teil des elektrischen Dipols anlagern. Das Dispergiermittel erleichtert dabei das Dispergieren und damit die gleichmäßige Verteilung des Bindemittels mitsamt den Partikeln des Isolationsmittels in der Grundsubstanz. Das zugegebene Graphit lagert sich mit seinen einzelnen Partikeln schließlich ebenfalls an das bereits das Isolationsmittel bindende Bindemittel an und bildet zusammen mit dem Isolationsmittel eine Vielzahl kleinster elektrischer Dipole, die gleichmäßig in dem Beschichtungsmaterial und dann in der fertig aufgebrachten Beschichtung verteilt sind. Damit wird ein hoher Abstrahlgrad von elektromagnetischer Strahlung bei einer hochfrequenten Anregung erreicht. Insbesondere ist damit eine Frequenzabstrahlung im Bereich der molekularen Eigenfrequenz des zu erwärmenden Materials als auch eine entsprechende geeignete Frequenz für ein zusätzlich im Raum angeordnetes, flüssiges oder gasförmiges Medium emittierbar.

Für eine hochfrequente Anregung wird ein Oberwellengenerator vorgeschlagen, der einen elektrischen Baustein umfasst, welcher bei einer Ansteuerung mit einer Ansteuerschwingung eine steile Stromanstiegsgeschwindigkeit entsprechend einer steilen Anstiegsflanke aufweist und damit zur Erzeugung eines hohen Oberwellenanteils, beispielsweise bis zur fünfzigsten harmonischen Schwingung geeignet ist.

Dieser Oberwellengenerator ist an die beiden elektrischen Leiter des Heizelements für eine Anregung des Heizelements zur Abstrahlung eines Schwingungsspektrums im Bereich von molekularen Eigenfrequenzen angekoppelt, die vorzugsweise als Bandenresonanzbereiche im Tera-Hertz-Bereich liegen.

Als sulfurierte Öle können z. B. sulfatiertes Olivenöl, sulfatiertes Sesamöl oder sulfatiertes Palmöl verwendet werden. Nach Anspruch 2 ist das sulfurierte Öl jedoch bevorzugt sulfatiertes Rizinusöl, das als Sulforicinat oder als Türkischrotöl bekannt ist. Dieses sulfatierte Rizinusöl ist insbesondere wegen seiner grenzflächenaktiven Eigenschaften gut geeignet.

Nach Anspruch 3 sind die Phenole vorzugsweise carbonisierte, durch Cracken hergestellte Phenole, die eine besondere Eignung für die Teilchenanlagerung aufweisen. Anstelle der Phenole ist vorzugsweise Benzisothiazolinon zu verwenden.

Nach Anspruch 4 ist das Verdünnungsmittel ein Lösungsmittel auf Aromatenbasis und/oder Alkoholbasis und/oder Esterbasis und/oder Ketonbasis, z. B. Terpene.

Als Isolationsmittel können eine Vielzahl bekannter Isolatoren verwendet werden. Nach Anspruch 5 ist das Isolationsmittel jedoch bevorzugt ein isolierender Ruß. Dieser Ruß wird vorteilhafterweise bereits im gemahlenen Zustand mit einer sehr kleinen Partikelgröße zugegeben. Dadurch wird eine gleichmäßige Verteilung des Rußes in der Grundsubstanz und damit insgesamt die Ausbildung einer Vielzahl elektrischer Dipole in dem Beschichtungsmaterial begünstigt.

Nach Anspruch 6 ist das Dispergieren und damit die gleichmäßige Verteilung des Bindemittels mitsamt den Partikeln des Isolationsmittels in der Grundsubstanz erleichternde Dispergiermittel eine organische, monomere und/oder polymere Substanz.

Nach Anspruch 7 enthält das Beschichtungsmaterial in einer bevorzugten Ausführungsform ein Thixotropierungsmittel. Dieses Thixotropierungsmittel bewirkt, dass das Beschichtungsmaterial eine dickflüssige Konsistenz aufweist, d. h. während des Aufbringens auf eine Strahlungsfläche leicht streichbar ist, im Ruhezustand dagegen so zäh ist, dass es zu keiner Tropfen- oder Tränenbildung an der Oberfläche kommen kann. Dadurch wird eine konturengenaue Aufbringung des Beschichtungsmaterials auf eine Strahlungsfläche möglich

Als besonders geeigneter elektrischer Baustein zur Erzeugung eines hohen Oberwellenanteils ist gemäß Anspruch 8 ein Triac vorgeschlagen, der vorzugsweise bei einem Phasenanschnitt einen Anstiegswinkel zwischen 87° und annähernd 90° aufweist. Es können jedoch auch andere, an sich bekannte elektrische Bausteine mit ähnlichen Eigenschaften und mit ihren an sich bekannten elektronischen Ansteuerkomponenten verwendet werden, wie z. B. ein Doppel-MOSFET.

Dabei ist darauf hinzuweisen, dass solche elektrischen Bausteine mit so steilen Stromanstiegsgeschwindigkeiten und damit einem so hohen Oberwellenanteil für einen Betrieb in üblichen Stromnetzen gerade wegen ihres hohen Oberwellenanteils nicht geeignet. In der vorliegenden Gesamtanordnung eines solchen Oberwellengenerators in Verbindung mit wenigstens einem angeschlossenen Heizelement ergibt sich jedoch eine Bedämpfung des hohen Oberwellenanteils durch die Anregung im Heizelement. Dadurch ist die Gesamtanordnung in Verbindung mit einem üblichen Stromnetz ohne die Gefahr einer Netzverseuchung mit einem hohen Oberwellenanteil betreibbar.

Damit wird insbesondere durch eine solche Ausbildung eines Oberwellengenerators für eine hochfrequente Anregung eine insgesamt sehr kostengünstige Heizanordnung hinsichtlich der erforderlichen Bauteile erhalten. Ein weiterer erheblicher Kostenvorteil bei einer solchen Heizungsanordnung ergibt sich durch die äußerst geringen Installationskosten und den geringen Platzbedarf im Vergleich zu bekannten Warmluft- und Warmwasserheizsystemen, sowie durch die äußerst geringen Betriebskosten.

Damit eignen sich erfindungsgemäße Heizungsanordnungen für alle möglichen Heizzwecke, insbesondere in öffentlichen und privaten Bauten, wobei durch den geringen Platzbedarf und eine ggf. verdeckte Anordnung erhebliche architektonische Gestaltungsfreiräume eröffnet werden.

In einer konkreten Ausführung eines Heizelements wird nach Anspruch 9 vorgeschlagen, dass die elektrischen Leiter auf dem Heizelement jeweils als Kupferfolienbänder ausgebildet sind. Der elektrische Kontakt zu der Beschichtung kann durch eine direkte Anlage oder Einbettung erfolgen und stellt eine kapazitive und/oder induktive Ankopplung dar.

Für eine Anpassung der Heizwirkung an unterschiedliche räumliche Gegebenheiten und an veränderliche Temperaturverhältnisse ist eine Steuerung und/oder Regelung nach Anspruch 10 durch Veränderung der Amplitude und/oder der Frequenz der Ansteuerschwingungen einfach mittels an sich bekannter elektronischer Steuerungen durchführbar.

Das Grundträgermaterial des Heizträgerelements kann plattenförmig stabil sein, so dass sich paneelenartige Heizungselemente ergeben, die beispielsweise durch übliche Wandbefestigungen montierbar sind. Es ist jedoch auch möglich, das Grundträgermaterial rollbar in der Art einer Tapete auszuführen, die dann auf eine Wand aufklebbar ist.

Die Dimensionierung und Anpassung einer erfindungsgemäßen Heizungsanordnung ist einfach durchführbar, wobei gemäß Anspruch 12 beispielsweise mehrere Heizelemente als Flächenelemente in optisch ansprechender Weise und in einer kompakten Anordnung kombinierbar sind. Um einen möglichen Einfluss von Leitungskapazitäten möglichst gering zu halten, ist dabei auf vorzugsweise geringe Zuleitungslängen zu achten.

Die Heizungsanordnung ist vorteilhaft als Raumheizung für Wohnräume, gewerblich genutzte Räume und öffentliche Räume, z. B. in Kirchen einsetzbar. Zudem ist die Heizungsanordnung besonders geeignet für Trockenräume, z. B. für Trockenkammern von Lackieranlagen oder zur Holztrocknung, wobei der Energieaufwand gegenüber herkömmlichen Heizungen erheblich reduzierbar ist.

Gemäß Anspruch 13 können jedoch auch das Grundträgermaterial oder Materialteile davon oder daran anliegende oder verbundene Materialien so gewählt werden, dass sie über molekulare Eigenfrequenzen anregbar und damit besonders effektiv direkt aufheizbar sind.

In einer Ausführungsform nach Anspruch 14 kann mittels eines rohrförmigen Grundträgers, der vorzugsweise außen, gegebenenfalls auch innen, beschichtet ist, eine darin enthaltene, molekulare Eigenfrequenzen aufweisende Flüssigkeit erwärmt werden. Insbesondere ist damit ein einfach aufgebauter, mit wenig Energieaufwand betreibbarer Durchlauferhitzer, z. B. ein Haushalts-Wasser-Durchlauferhitzer herstellbar.

Anhand einer Zeichnung wird die Erfindung näher erläutert.

Es zeigen:
- Fig. 1: eine perspektivische Darstellung einer Heizungsanordnung als Raumheizung, und
- Fig. 2: eine Ansteuerschaltung.

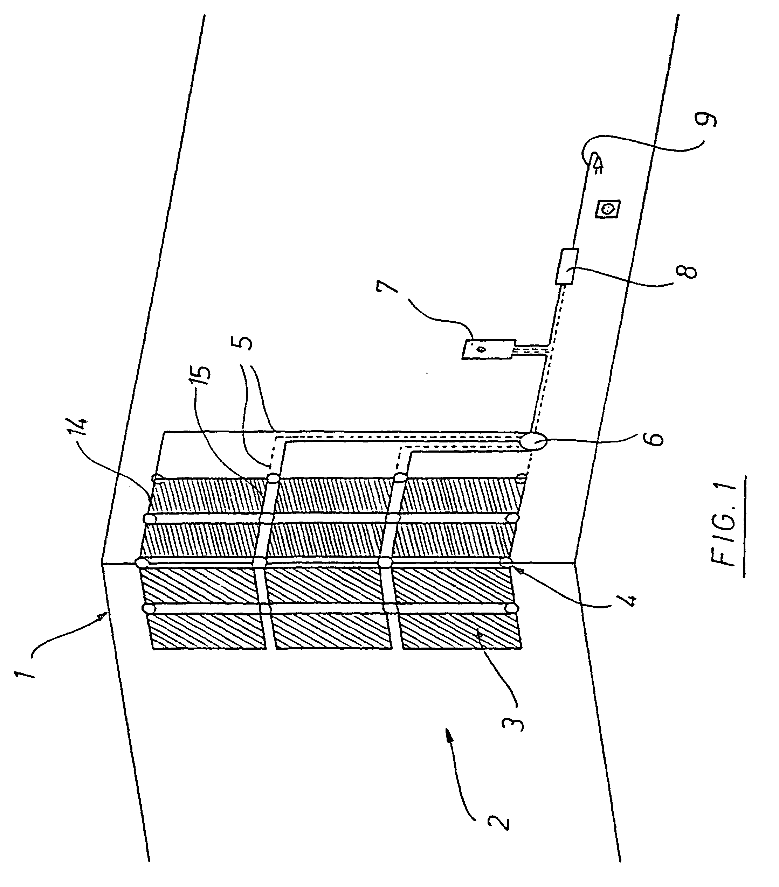

In Figur 1 ist eine perspektivische Darstellung einer Raumecke 1 gezeigt, in der eine Heizungsanordnung 2 installiert ist. Die Heizungsanordnung 2 besteht hier aus einer Kombination von zwölf Heizelementen 3, die jeweils in horizontalen Gruppen von vier Heizelementen in der Raumecke 1 symmetrisch gruppiert sind. Dabei sind die Heizelemente 3 als rechtwinklige Flächenelemente ausgebildet und jeweils an ihren Schmalseiten miteinander in Verbindungspunkten 4 als Parallelverbindungen verbunden. Die Heizungselemente 3 können entweder ein plattenförmiges Grundträgermaterial oder ein rollbares Grundträgermaterial aufweisen, wobei sie dann entsprechend anzuschrauben oder anzukleben sind. Jeweils drei vertikale, randseitige Heizelemente 3 sind durch Verbindungskabel 5 über eine Verteilerdose 6 und mit den anderen Heizelementen 3 bzw. deren elektrischen Leitern 14, 15 als Kupferfolienbänder über die Parallelverbindungen 4 verbunden.

Ein Steuergerät 7 enthält insbesondere einen Oberwellengenerator mit beispielsweise einem Triac mit steiler Stromantriebsgeschwindigkeit sowie mit einer Steuerung oder Regelung der Schwingungsamplituden. Das Steuergerät 7 ist über die Verteilerdose 6 einerseits mit den Heizelementen 3 verbunden und wird andererseits über einen Trafo 8 über einen Netzanschluss 9 gespeist.

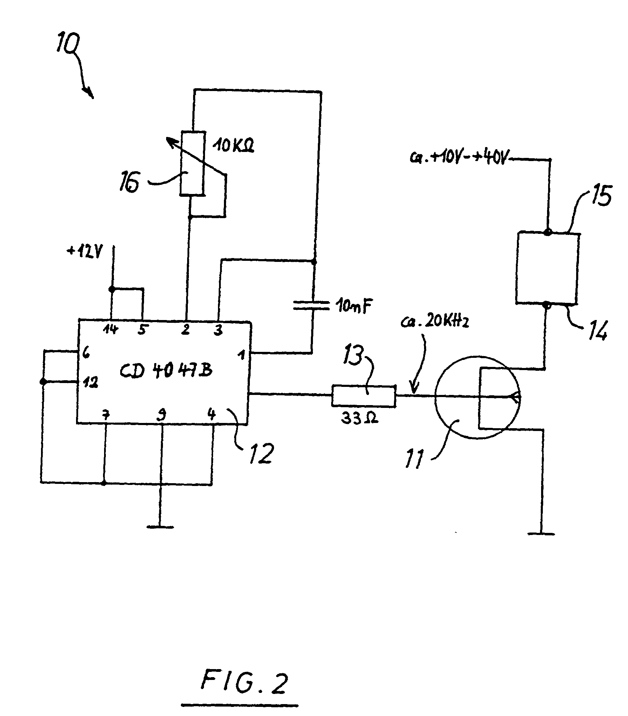

In Figur 2 ist eine konkrete Ansteuerschaltung 10 des Steuergeräts 7 mit einem Doppel-MOSFET 11 dargestellt.

Mit einem Multivibrator 12 als integrierte Halbleiterschaltung (Typ CD 4047 B) wird über einen Widerstand 13 der Doppel-MOSFET 11 mit einer bereits relativ hohen Frequenz von ca. 20 kHz angesteuert. Der Multivibrator 12 ist in der in Figur 2 dargestellten Art beschaltet. Im Stromkreis des Doppel-MOSFET 11 liegen ein (schematisch dargestelltes) Heizelement bzw. dessen elektrische, beabstandete Leiter 14, 15 in der Art von Kupferfolienbändern. Mit einem an den Multivibrator 12 angeschlossenen Potentiometer 16 sind die Amplitude und die Frequenz der Ansteuerschwingungen für den Doppel-MOSFET 11 in einem Bereich von ca. U_{eff} 20 V bis 30 V und 18 kHz bis 22 kHz einstellbar, wodurch die Heizenergie und damit die Heizwirkung steuerbar sind.

Für die Funktion und die Abstrahlung eines Schwingungsspektrums im Bereich von molekularen Eigenfrequenzen ist die steile Stromanstiegsgeschwindigkeit des Doppel-MOSFET 11 maßgeblich, wobei der dadurch erzeugte hohe Oberwellenanteil bis etwa zur fünfzigsten harmonischen Schwingung wirksam ist.

Eine elektrische Schaltung mit ähnlicher Funktion wie die in Figur 2 dargestellte Schaltung kann mit einem Triac aufgebaut werden. Während die Ansteuerung des Doppel-MOSFET 11 bereits mit einer relativ hohen Frequenz im Bereich von 20 kHz erfolgt, kann ein Triac in einer etwa gleichwirkenden Schaltung unmittelbar mit einer Netzfrequenz von ca. 50 Hz angesteuert werden.

## Patentansprüche

1. Heizungsanordnung, bestehend aus einer Kombination folgender Merkmale:
- wenigstens einem Heizelement (3) als Flächenelement mit zwei beabstandeten elektrischen Leitern und einer dazwischen befindlichen Beschichtung aus einem Beschichtungsmaterial zur Erzeugung elektromagnetischer Wellen, bestehend aus Bindemittel, Isolationsmittel, Dispergiermittel, Wasser und Graphit, wobei das Beschichtungsmaterial zusammengesetzt ist aus
a. 55 bis 65 % Stoffmengenanteile einer Grundsubstanz aus
• 39 bis 49 % Stoffmengenanteile Bindemittel,
• 18 bis 23 % Stoffmengenanteile Isolationsmittel,
• 18 bis 24 % Stoffmengenanteile Dispergiermittel,
• 12 bis 16 % Stoffmengenanteile destilliertes Wasser
und
b. 35 bis 45 % Stoffmengenanteile Graphit,
wobei das Bindemittel zusammengesetzt ist aus
• 64 bis 79 % Stoffmengenanteile destilliertes Wasser,
• 4 bis 6 % Stoffmengenanteile sulfuriertes Öl,
• 0,16 bis 0,24 % Stoffmengenanteile Phenole oder 0,05 bis 0,5 % Stoffmengenanteile Benzisothiazolinon,
• 15 bis 19 % Stoffmengenanteile Kasein,
• 0,8 bis 1,2 % Stoffmengenanteile Harnstoff,
• 2 bis 3 % Stoffmengenanteile alkalisches Verdünnungsmittel, und
• 2,5 bis 3,5 % Stoffmengenanteile Caprolactam, und
wobei mittels des Beschichtungsmaterials aus dem Isolationsmittel, dem Graphit und dem Bindemittel elektromagnetische Wellen aussendbar sind,
- wenigstens einem Steuer-/Regelgerät (7) mit einem Oberwellengenerator, der einen elektrischen Baustein umfasst, welcher bei Ansteuerung mit einer Ansteuerschwingung eine steile Stromanstiegsgeschwindigkeit entsprechend einer steilen Anstiegsflanke aufweist und damit zur Erzeugung eines hohen Oberwellenanteils geeignet ist, und
- der Oberwellengenerator an die beiden elektrischen Leiter des Heizelements (3) angekoppelt ist für eine Anregung des Heizelements (3) zur Abstrahlung eines Schwingungsspektrums im Bereich von molekularen Eigenfrequenzen.

2. Heizungsanordnung nach Anspruch 1, wobei dass das sulfurierte Öl bevorzugt sulfatiertes Rizinusöl ist.

3. Heizungsanordnung nach Anspruch 1 oder Anspruch 2, wobei dass die Phenole carbonisierte, durch Cracken hergestellte Phenole sind oder vorzugsweise Benzisothiazolinon verwendet wird.

4. Heizungsanordnung nach einem der Ansprüche 1 bis 3, wobei das Verdünnungsmittel ein Lösungsmittel auf Aromatenbasis und/oder Alkoholbasis und/oder Esterbasis und/oder Ketonbasis ist.

5. Heizungsanordnung nach einem der Ansprüche 1 bis 4, wobei das Isolationsmittel ein isolierender Ruß ist.

6. Heizungsanordnung nach einem der Ansprüche 1 bis 5, wobei das Dispergiermittel eine anorganische und/oder organische, monomere und/oder polymere Substanz ist.

7. Heizungsanordnung nach einem der Ansprüche 1 bis 6, wobei das Beschichtungsmaterial ein Thixotropierungsmittel enthält.

8. Heizungsanordnung nach einem der Ansprüche 1 bis 7, wobei der elektrische Baustein ein Triac und/oder ein Doppel-MOSFET ist, mit den zugeordneten, an sich bekannten elektronischen Ansteuerungskomponenten.

9. Heizungsanordnung nach einem der Ansprüche 1 bis 8, wobei die elektrischen Leiter auf dem Heizelement (3) als im wesentlichen parallel ausgerichtete Kupferfolienbänder ausgebildet sind und der elektrische Kontakt zur Beschichtung als kapazitive und/oder induktive Ankopplung ausgebildet ist, wobei die Beschichtung unter oder über den Kupferfolienbändern liegt oder diese in die Beschichtung eingebettet sind.

10. Heizungsanordnung nach einem der Ansprüche 1 bis 9, wobei die Heizwirkung durch Veränderung der Amplituden und/oder der Frequenz der Ansteuerschwingungen steuerbar und/oder regelbar ist.

11. Heizungsanordnung nach einem der Ansprüche 1 bis 10, wobei ein Grundträgermaterial des Heizelements (3) plattenförmig stabil oder rollbar in der Art einer Tapete ausgebildet ist.

12. Heizungsanordnung nach einem der Ansprüche 1 bis 11, wobei mehrere Heizelemente (3) als Flächenelemente verwendet sind, wobei alle Flächenelemente eine gleiche rechtwinklige Fläche aufweisen und in einer symmetrischen Anordnung parallel geschaltet sind mit vorzugsweise geringen Zuleitungslängen.

13. Heizungsanordnung nach einem der Ansprüche 1 bis 12, wobei ein bzw. das Grundträgermaterial selbst oder damit verbundene, anliegende oder eingelassene Materialteile über molekulare Eigenfrequenzen anregbar und damit aufheizbar sind.

14. Heizungsanordnung nach einem der Ansprüche 1 bis 13, wobei ein bzw. das Grundträgermaterial als Rohr ausgebildet und Bestandteil einer Flüssigkeitsheizung ist, wobei Flüssigkeit in das Rohr einfüllbar und/oder durchleitbar ist.

## Claims

1. Heating arrangement consisting of a combination of the following features:
- at least one heating element (3) as a panel element having two electrical conductors at a distance from one another and in between them a coating of a coating material for producing electromagnetic waves, consisting of binder, insulant, dispersant, water and graphite, the coating material being composed of
a. 55 to 65% mole fractions of a base substance comprising
• 39 to 49% mole fractions of binder,
• 18 to 23% mole fractions of insulant,
• 18 to 24% mole fractions of dispersant,
• 12 to 16% mole fractions of distilled water
and
b. 35 to 45% mole fractions of graphite,
the binder being composed of
• 64 to 79% mole fractions of distilled water,
• 4 to 6% mole fractions of sulphurized oil,
• 0.16 to 0.24% mole fractions of phenols or 0.05 to 0.5% mole fractions of benzisothiazolinone,
• 15 to 19% mole fractions of casein,
• 0.8 to 1.2% mole fractions of urea,
• 2 to 3% mole fractions of alkaline diluent, and
• 2.5 to 3.5% mole fractions of caprolactam, and
where by means of the coating material comprising the insulant, the graphite and the binder it is possible to emit electromagnetic waves,
- at least one controller/regulator (7) having a harmonics generator which comprises an electrical module which when driven with a driver oscillation exhibits a steep rate of current rise, corresponding to a steep rising flank, and is therefore suitable for producing a high harmonics content, and
- the harmonics generator is coupled to the two electrical conductors of the heating element (3) for exciting the heating element (3) to emit an oscillation spectrum in the range of natural molecular frequencies.

2. Heating arrangement according to Claim 1, wherein the sulphurized oil is preferably sulphated castor oil.

3. Heating arrangement according to Claim 1 or Claim 2, wherein the phenols are carbonized phenols produced by cracking or, preferably, benzisothiazolinone is used.

4. Heating arrangement according to one of Claims 1 to 3, wherein the diluent is an aromatics-based and/or alcohol-based and/or ester-based and/or ketone-based solvent.

5. Heating arrangement according to one of Claims 1 to 4, wherein the insulant is an insulating carbon black.

6. Heating arrangement according to one of Claims 1 to 5, wherein the dispersant is an organic and/or inorganic, monomeric and/or polymeric substance.

7. Heating arrangement according to one of Claims 1 to 6, wherein the coating material comprises a thixotropic agent.

8. Heating arrangement according to one of Claims 1 to 7, wherein the electrical module is a triac and/or a double MOSFET, with the associated, conventional electronic driver components.

9. Heating arrangement according to one of Claims 1 to 8, wherein the electrical conductors on the heating element (3) are configured as copper foil strips aligned essentially in parallel and the electrical contact to the coating is configured as capacitive and/or inductive coupling, the coating lying below or above the copper foil strips or these strips being embedded in the coating.

10. Heating arrangement according to one of Claims 1 to 9, wherein the heating effect can be controlled and/or regulated by changing the amplitudes and/or the frequency of the driver oscillations.

11. Heating arrangement according to one of Claims 1 to 10, wherein a base support material of the heating element (3) is configured stably in panel form or reliably in the manner of a wallpaper.

12. Heating arrangement according to one of Claims 1 to 11, wherein two or more heating elements (3) are used as panel elements, all panel elements having an equal rectangular area and being connected in parallel in a symmetrical arrangement with preferably short supply lines.

13. Heating arrangement according to one of Claims 1 to 12, wherein a or the base support material itself, or parts of material connected to it, lying on it or let into it, are excitable via natural molecular frequencies and thus are heatable.

14. Heating arrangement according to one of Claims 1 to 13, wherein a or the base support material is configured as a pipe and is part of a liquid heating system, it being possible for liquid to be introduced into the pipe and/or passed-through.

## Revendications

1. Dispositif de chauffage, formé d'une combinaison des caractéristiques suivantes :
- au moins un élément chauffant (3), réalisé sous la forme d'élément de surface, ayant deux conducteurs électriques espacés et un revêtement intermédiaire, en matériau de revêtement pour produire des ondes électromagnétiques, formé d'un liant, d'un isolant, d'un dispersant, d'eau et de graphite, le matériau de revêtement étant composé de :
a. 55 à 65 % de quantité de substance d'une substance de base, constituée de
• 39 à 49 % de quantité de substance d'un liant,
• 18 à 23 % de quantité de substance d'un isolant,
• 18 à 24 % de quantité de substance d'un dispersant,
• 12 à 16 % de quantité de substance d'eau distillée
et
b. 35 à 45 % de quantité de substance de graphite,
le liant étant composé de
• 64 à 79 % de quantité de substance d'eau distillée,
• 4 à 6 % de quantité de substance d'huile sulfurée,
• 0,16 à 0,24 % de quantité de substance de phénols, ou de 0,05 à 0,5 % de quantité de substance de benzisothiazolinone,
• 15 à 19 % de quantité de substance de caséine,
• 0,8 à 1,2 % de quantité de substance d'urée,
• 2 à 3 % de quantité de substance de diluant alcalin, et
• 2,5 à 3,5 % de quantité de substance de caprolactame, et où, au moyen du matériau de revêtement formé de l'isolant, du graphite, et du liant, on peut émettre des ondes électromagnétiques,
- au moins un appareil de commande/régulation (7) avec un générateur d'harmoniques, comprenant un composant électrique, qui, en cas d'attaque avec une oscillation de commande, présente une vitesse de montée du courant raide, correspondant à un flanc de montée raide, et convient ainsi pour générer une haute proportion d'harmoniques, et
- le générateur d'harmoniques est couplé aux deux conducteurs électriques de l'élément chauffant (3), pour produire une excitation de l'élément chauffant (3), dans le but d'un rayonnement d'un spectre d'oscillation dans la plage des fréquences propres moléculaires.

2. Dispositif de chauffage selon la revendication 1, dans lequel l'huile sulfurée est, de préférence, de l'huile de ricin sulfatée.

3. Dispositif de chauffage selon la revendication 1 ou la revendication 2, dans lequel les phénols sont des phénols carbonisés, produits par craquage, ou bien, de préférence, de la benzisothiazolinone.

4. Dispositif de chauffage selon l'une des revendications 1 à 3, dans lequel le diluant est un solvant à base d'aromates et/ou à base d'alcool et/ou à base d'ester et/ou à base de cétone.

5. Dispositif de chauffage selon l'une des revendications 1 à 4, dans lequel l'isolant est une suie isolante.

6. Dispositif de chauffage selon l'une des revendications 1 à 5, dans lequel le dispersant est une substance anorganique et/ou organique, monomère et/ou polymère.

7. Dispositif de chauffage selon l'une des revendications 1 à 6, dans lequel le matériau de revêtement contient un agent thixotropique.

8. Dispositif de chauffage selon l'une des revendications 1 à 7, dans lequel le composant électrique est un triac et/ou un double MOSFET, avec les composants de commande électroniques associés, connus en soi.

9. Dispositif de chauffage selon l'une des revendications 1 à 8, dans lequel les conducteurs électriques, sur l'élément chauffant (3), sont réalisés sous la forme de rubans de feuille de cuivre, orientés sensiblement parallèlement, et le contact électrique par rapport au revêtement est réalisé sous la forme de couplage capacitif et/ou inductif, le revêtement étant placé au-dessous ou au-dessus des rubans de feuille de cuivre, ou bien ceux-ci étant incorporés dans le revêtement.

10. Dispositif de chauffage selon l'une des revendications 1 à 9, **caractérisé en ce que** l'effet chauffant est susceptible d'être commandé et/ou régulé par une modification des amplitudes et/ou de la fréquence des oscillations de commande.

11. Dispositif de chauffage selon l'une des revendications 1 à 10, **caractérisé en ce qu'**un matériau support de base de l'élément chauffant (3) est réalisé sous forme de plaque, de façon à être stable, ou bien à pouvoir être enroulé à la façon d'un tapis.

12. Dispositif de chauffage selon l'une des revendications 1 à 11, **caractérisé en ce que** plusieurs éléments chauffants (3), réalisés sous la forme d'éléments de surface, sont utilisés, sachant que tous les éléments de surface présentent une aire rectangulaire identique, et sont branchés en parallèle en agencement symétrique, de préférence avec de petites longueurs de lignes d'alimentation.

13. Dispositif de chauffage selon l'une des revendications 1 à 12, dans lequel un respectivement le matériau support de base lui-même, ou des parties de matériau lui étant liées, ayant été appliqués ou insérés, est/sont susceptibles d'être excité(e)s par des fréquences propres moléculaires et d'être ainsi chauffé(e)s.

14. Dispositif de chauffage selon l'une des revendications 1 à 13, dans lequel un respectivement le matériau support de base est réalisé sous la forme de tube, et fait partie d'un chauffage de liquide, le liquide étant susceptible d'être introduit dans le tube pour le remplir et/ou d'être guidé pour passer à travers celui-ci.
